# EUROPÄISCHE PATENTSCHRIFT

(11) **EP 0 992 544 B1**
(45) Veröffentlichungstag und Bekanntmachung des Hinweises auf die Patenterteilung: **03.12.2003**
(21) Anmeldenummer: 99118087.8
(22) Anmeldetag: 24.09.1999
(51) Int. Cl.: C09B 35/029, C09B 69/04

(54) **Disazofarbstoffe**
Disazo-dyestuffs
Colorants du type disazoiques

(30) Priorität: 07.10.1998 DE 19846098
(43) Veröffentlichungstag der Anmeldung: 12.04.2000
(73) Patentinhaber: BAYER AG, 51368 Leverkusen (DE)
(72) Erfinder: Kunde, Klaus, Dr., 53819 Neunkirchen-Seelscheid (DE); Zarges, Wolfgang, Dr., 51065 Köln (DE)

(56) Entgegenhaltungen:
- EP-A- 0 204 244
- EP-A- 0 301 350
- EP-A- 0 391 170
- EP-A- 0 534 903
- EP-A- 0 831 129
- EP-A- 0 831 131
- DE-A- 3 236 238

## Beschreibung

Die vorliegende Erfindung betrifft neue Disazofarbstoffe, Verfahren zu deren Herstellung und deren Verwendung zum Färben von cellulosehaltigen Materialien.

Gemäß EP-A-534 903, EP-A-301 350, EP-A-831 129, EP-A-391 170 und EP-A-831 131 werden Disazofarbstoffe zum Papierfärben offenbart.

Aus EP-A-204 244 sind Tetrakisazofarbstoffe und aus DE-A-3 236 238 Disazo-Metallkomplexe als Papierfarbstoffe bekannt.

Die neuen Disazofarbstoffe entsprechen der allgemeinen Formel (VIII) 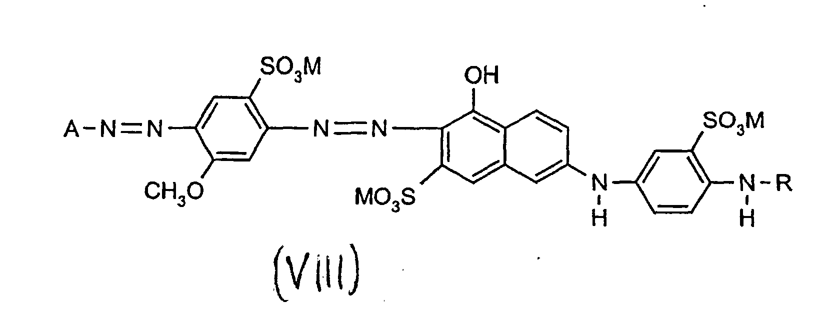 worin
- A: für einen Rest der Formel 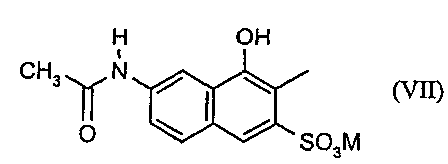 steht,
worin
R für Wasserstoff steht, und
M für ein oder mehrere Kationen steht, wobei mehr als 25 Äquivalent-% aller Kationen M im Molekül einem Ammoniumrest der Formel ⊕NR₁R₂R₃R₄ entsprechen, worin
R₁,R₂,R₃ und R₄ unabhängig von einander für Wasserstoff, C₁-C₄-Alkyl und C₂-C₄-Hydroxyalkyl stehen.

Äquivalent-% bedeutet im Rahmen dieser Anmeldung der Anteil an der Gesamtmenge an Kationen M in der Verbindung (VIII).

Bevorzugt ist es, wenn wenigstens einer der Reste R₁-R₄ C₂-C₄-Hydroxyalkyl bedeutet.

Besonders bevorzugt ist es, wenn der Anteil aller Kationen M zu mehr als 50, insbesondere mehr als 60 Äquivalent-% an Alkanolammonium beträgt.

Die übrigen Kationenanteile sind vorzugsweise Na⊕, K⊕ oder Li⊕.

Ganz besonders bevorzugt setzen sich die Kationen M aus mehr als 75 Äquivalent-% aus Alkanolammonium zusammen.

Als bevorzugte Alkanolammonium-Salze sind zu nennen:
H₃⊕NCH₂CH₂OH, H₂⊕N(CH₂CH₂OH)₂, H⊕N(CH₂CH₂OH)₃, ⊕N(CH₂CH₂OH)₄, H⊕N(CH₃)(CH₂CH₂OH)₂, H⊕N(CH₃)₂(CH₂CH₂OH),
⊕N(CH₃)₄ und H⊕N(C₂H₅)(CH₂CH₂OH)₂.

Ganz besonders bevorzugt ist als Alkanolamonium-Kation H⊕N(CH₃)(CH₂CH₂OH)₂.

Die Erfindung betrifft weiterhin ein Verfahren zur Herstellung der erfindungsgemäßen Verbindungen der Formel (VIII) dadurch gekennzeichnet, daß man Verbindungen der Formel (VIII), worin M für Na⊕, Li⊕ und/oder K⊕ steht, in Form ihrer wäßrigen Lösungen oder Suspensionen in Gegenwart von Ammoniumsalzen der Formel ⊕NR₁R₂R₃R₄, An⊖, worin R₁ bis R₄ die oben angegebenen Bedeutungen haben und An⊖ für ein anorganisches Anion steht, membranfiltriert.

Die Membranfiltration kann dabei unter Aufkonzentration oder unter Diafiltration erfolgen.

Zweckmäßigerweise geht man dabei vorzugsweise so vor, daß man die Syntheselösung enthaltend das Li, Na oder K-Salz (bzw. Mischsalze) des Farbstoffes der Formel (VIII) zunächst im Wege der Diafiltration, d.h. den kontinuierlichen Austausch von Permeat gegen VE-Wasser entsalzt, die Lösung dann mit einem Überschuß des gewünschten Ammoniumsalzes versetzt, bzw. dieses durch Zugabe von Amin und Säure in der Farbstofflösung selbst erzeugt und anschließend weiter entsalzt. Zugabe von Ammoniumsalz und anschließende Entsalzung können je nach Membranselektivität für die vorhandenen Kationen und Anionen wiederholt werden.

Eine andere Möglichkeit besteht darin, die anfängliche Entsalzung fortzusetzen, das Permeat aber nun gegen Ammoniumsalzlösung anstelle von VE-Wasser auszutauschen.

Im allgemeinen kommt bei dieser Umsalzung wenigstens ein fünffacher molarer Überschuß, bevorzugt wenigstens ein zehnfacher molarer Überschuß des Ammoniumsalzes (bezogen auf Farbstoff) zur Anwendung.

Um einen ausreichenden Farbstoffrückhalt zu gewährleisten, sind bei der Bearbeitung Nano- und Ultrafiltrationsmembranen als Polymermembranen bevorzugt.

Die aktive Trennschicht kann dabei z.B. aus Polyamid, Polysulfon, Polyethersulfon oder Polyaramid bestehen. Als Membranen kommen weiterhin bevorzugt solche Polymermembranen in Frage, wie sie beispielsweise in EP-A-652 044 offenbart sind.

Bevorzugt weisen die eingesetzten Membranen Trenngrenzen von MWCO 200 bis 15 000 Dalton, vorzugsweise 300 bis 5 000 Dalton auf.

Das erfindungsgemäße Verfahren erfolgt vorzugsweise bei einer Temperatur von 40 bis 80, insbesondere bei 50 bis 70°C.

Die eingesetzten Na-Salze der Farbstoffe der Formel (VIII) sind bereits in DE-A-19 638 890 offenbart oder können in Analogie dazu hergestellt werden.

Die Erfindung betrifft ein weiteres Verfahren zur Herstellung der erfindungsgemäßen Farbstoffe, dadurch gekennzeichnet, daß man Verbindungen der Formel (I), worin M für Wasserstoff steht, mit Aminen der Formel NR¹R²R³ umsetzt, wenn R¹ bis R³ die oben angegebenen Bedeutungen haben.

Die Säureform der Verbindung der Formel (VIII) kann beispielsweise aus dem bevorzugt erhaltenen Na-Salz bei der Synthese durch Austausch mit einer anorganischen Säure, vorzugsweise HCl, erhalten werden.

Die Herstellung der erfindungsgemäßen Ammoniumsalze der Formel (VIII) nach diesem Verfahren erfolgt vorzugsweise bei einer Temperatur von 10 bis 50°C.

Es kann vorteilhaft sein, den Farbstoff der Formel (VIII) als Alkalisalz aus der Syntheselösung bzw. -suspension zu isolieren, um den größten Teil der Salzfracht zu entfernen und den Farbstoff in VE-Wasser aufzulösen.

Dazu ist es besonders vorteilhaft, den pH-Wert der Syntheselösung bzw. -suspension durch Zugabe von Säure, vorzugsweise von einer Mineralsäure wie Schwefelsäure oder insbesondere Salzsäure auf < 2 abzusenken und den ausgefällten Farbstoff zu isolieren. Bei den auf diese Art und Weise isolierten Farbstoffen ist ein Teil der Alkali-Kationen durch Protonen ersetzt.

Wird auf diese Art und Weise eine Farbstoffpaste mit einem Alkali-Kationen-Anteil von weniger als 25 % erhalten, so kann man durch Zugabe der zur Neutralisation notwendigen Menge an Amin oder Ammoniumhydroxid direkt eine konzentrierte wäßrige Lösung erhalten.

Die erfindungsgemäßen Farbstoffe färben cellulosehaltige Materialien, insbesondere Papier, die ebenfalls Gegenstand dieser Anmeldung sind, Baumwolle und Viskose sowie Leder in blauen Tönen mit guten Naß- und Lichtechtheiten.

Die Farbstoffe können nach allen in der Papier- und Textilindustrie für substantive Farbstoffe gebräuchlichen Verfahren verwendet werden, insbesondere in der Masse, wie in der Oberflächenfärbung von Papier für geleimte und ungeleimte Sorten, ausgehend von gebleichtem oder ungebleichtem Zellstoff verschiedener Provenienz wie Nadel- oder Laubholz-Sulfit- und/oder -Sulfat-Zellstoff. Sie können auch in der Garnoder Stückfärberei von Baumwolle, Viskose und Leinen nach dem Ausziehverfahren aus langer Flotte oder in Kontinueverfahren angewandt werden.

Die mit den erfindungsgemäßen Farbstoffenerhaltenen Papierfärbungen zeichnen sich durch gute Licht- und Naßechtheit (Ausblutechtheit) sowie Säure-, Alkali- und Alaun-Echtheit aus. Auch auf die Brillanz und Klarheit der Farbtöne ist hinzuweisen. Ferner ist das Kombinationsverhalten mit geeigneten Farbstoffen sehr gut.

Zum Färben von Papier in der Masse können die Farbstoffe der Papierpulpe vor der Blattbildung zugesetzt werden, entweder dem Dickstoff nach dem Aufschlagen der Cellulose oder dem Dünnstoff vor dem Auflaufen auf die Papiermaschine. Bei der Herstellung von in der Masse geleimtem Papier werden sie vorzugsweise vor der Zugabe des Leimungsmittels dem Dünnstoff zugesetzt.

Bei der Oberflächenfärbung wird der Farbstoff nach der Blattbildung appliziert. Dies geschieht vorzugsweise in der Leimpresse, indem der Farbstoff in einer konzentrierten Stärkelösung aufgelöst und in dieser Form auf das Papier aufgebracht wird.

Die Farbstoffe der Formel (I) können eingesetzt werden als feste Farbstoffpräparationen, vorzugsweise als Pulver oder Granulate, die gegebenenfalls übliche Zusatzstoffe wie z.B. ionische oder nichtionische Einstellmittel und/oder Entstaubungsmittel, enthalten.

Für das erfindungsgemäße Verfahren bevorzugt ist die Verwendung flüssiger Präparationen, insbesondere die Verwendung von konzentrierten wässrigen Lösungen, die vorzugsweise frei sind von organischen Lösungsvermittlern und mindestens einen Farbstoff der allgemeinen Formel (I) enthalten. Die flüssigen Farbstoffpräparationen enthalten im allgemeinen 10 bis 60 Gew.-%, vorzugsweise 10 bis 40 Gew.-% an mindestens einem Farbstoff der Formel (I), bezogen auf die fertige Präparation.

Ebenfalls Gegenstand dieser Anmeldung ist ein Verfahren zur Herstellung von Farbstoffen der Formel (I) 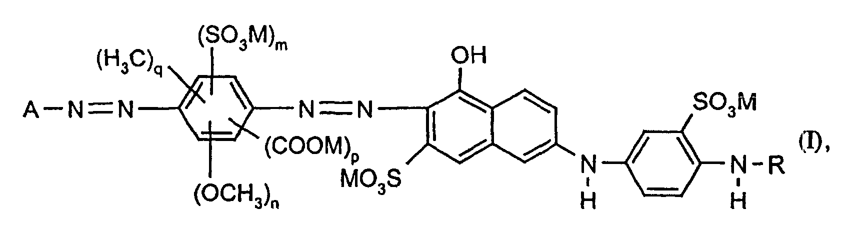 worin
- A: für einen Rest der Formel 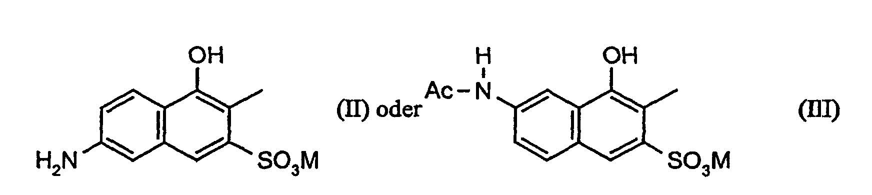 steht,
worin
Ac für einen Acetyl- oder Propionyl- oder einen gegebenenfalls durch CH₃, CH₃O oder COOM substituierten Benzoylrest steht,
m, n, p, q für 0 oder 1 stehen und
m + p = 1 ist,
R für Wasserstoff oder einen gegebenenfalls durch CH₃, CH₃O oder COOM substituierten Benzoylrest steht, und
M für ein oder mehrere Kationen steht, wobei mehr als 25 Äquivalent-% aller Kationen M im Molekül einem Ammoniumrest der Formel ⊕NR₁R₂R₃R₄ entsprechen, worin
R₁, R₂, R₃ und R₄ unabhängig voneinander für Wasserstoff, C₁-C₄-Alkyl und C₂-C₄-Hydroxyalkyl stehen, mit der Maßgabe, dass R ≠ Wasserstoff ist, wenn m = 1 und n = 0 und q = 0 ist, dadurch gekennzeichnet, dass man Verbindungen der Formel (I), worin M für Na⊕, Li⊕ und /oder K⊕ steht, in Form ihrer wässrigen Lösungen oder Suspensionen in Gegenwart von Ammoniumsalzen der Formel ⊕NR₁R₂R₃R₄An⊖, worin R₁-R₄ die oben angegebene Bedeutung haben und An⊖ für ein anorganisches Anion steht, membranfiltriert.

Gegenstand dieser Anmeldung sind ebenfalls Farbstoffe der Formel (I) 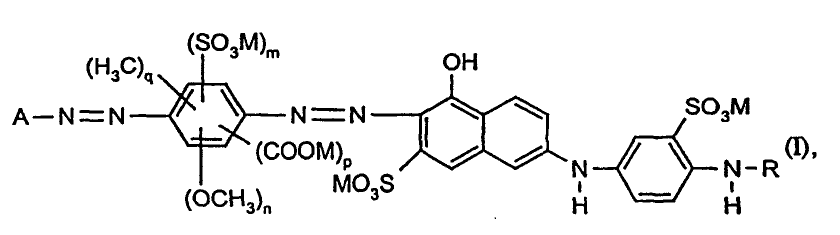 worin
- A: für einen Rest der Formel 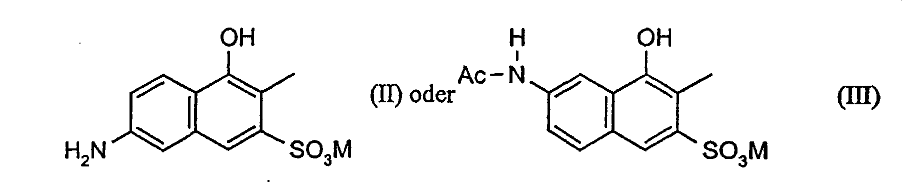
steht,
worin
- Ac: für einen Acetyl- oder Propionyl- oder einen gegebenenfalls durch CH₃, CH₃O oder COOM substituierten Benzoylrest steht,
- m, n, p, q: für 0 oder 1 stehen und
m + p = 1 ist,
- R: für einen gegebenenfalls durch CH₃, CH₃O oder COOM substituierten Benzoylrest steht, und
- M: für ein oder mehrere Kationen steht,
wobei mehr als 25 Äquivalent-% aller Kationen M im Molekül einem Ammoniumrest der Formel ⊕NR₁R₂R₃R₄ entsprechen, worin
- R₁, R₂, R₃ und R₄: unabhängig voneinander für Wasserstoff, C₁-C₄-Alkyl und C₂-C₄-Hydroxyalkyl stehen,
sowie ein Verfahren zu ihrer Herstellung, dadurch gekennzeichnet, dass man Verbindungen der Formel (I), worin M für Na⊕, Li⊕ und/oder K⊕ steht, in Form ihrer wässrigen Lösungen oder Suspensionen in Gegenwart von Ammoniumsalzen der Formel ⊕NR₁R₂R₃R₄, An⊖, worin R₁ bis R₄ die in Anspruch 1 angegebenen Bedeutungen haben und An⊖ für ein anorganisches Anion steht, membranfiltriert.

In den Beispielen werden folgende Abkürzungen verwendet: VE-Wasser : vollentsalztes Wasser.

### Beispiele

### Beispiel 1

a) 284 g 5-Amino-4-methoxy-2-nitrobenzolsulfonsäure werden in 3 000 ml Wasser bei einem pH-Wert von 1,5 und einer Temperatur von 30°C diazotiert. Zu dieser Suspension werden 281 g 6-Acetylamino-4-hydroxy-2-naphthalinsulfonsäure zugegeben. Der pH-Wert der Suspension wird mit Soda-Lösung auf 3 gebracht und gehalten. Nach Beendigung der Kupplung werden 250 g Natriumsulfid techn. (60 %) bei einer Temperatur von 60°C zugesetzt. Nach Beendigung der Reduktion wird die Aminoazoverbindung durch Zugabe von Salz ausgefällt und isoliert.
   310 g dieser Aminoazoverbindung werden in 2 500 ml Wasser bei einem pH-Wert von 1,5 und einer Temperatur von 30°C diazotiert. Diese Diazoniumverbindung tropft man bei einer Temperatur von 25°C zu einer Lösung von 200 g 4-Hydroxy-7-(4'-amino-3'-sulfophenylamino)-2-naphthalinsulfonsäure in 1500 ml Wasser, wobei der pH-Wert mit Sodalösung auf 7 gehalten wird. Nach Beendigung der Kupplung wird der pH-Wert der Farbstoff-Suspension durch Zugabe von Salzsäure auf 1,5 gebracht. Der ausgefällte Farbstoff wird isoliert. Er entspricht der folgenden Formel 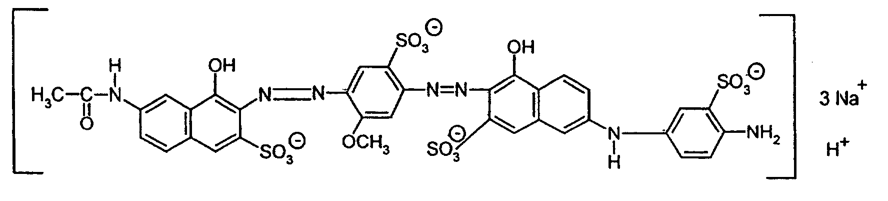
b) 4 000 g Paste mit einem Gehalt von 33 % des auf die unter a) beschriebene Weise hergestellten Farbstoffes werden bei 50°C in 26 kg vollentsalztes Wasser eingetragen. Durch Zugabe von 1 340 ml Lithiumhydroxidlösung (10 %ig) wird bei 50°C und pH 10,5 eine Lösung erhalten, die anschließend mit einer Membran in Spiralwickelmodulbauform, die eine Polyamid-Trennschicht besitzt, eine Trenngrenze von 3 500 Dalton hat und eine Tₘₐₓ von 50°C besitzt, entsalzt wird.
   Die gesättigte Lösung des Li, Na-Mischsalzes besitzt bei 50°C und einer Chloridkonzentration von 0,2 % eine Extinktion von 26 (1 cm Schichtdicke, 1 %ige Lösung in Wasser, Wellenlänge: 630 nm).
c) 35 kg Paste des Farbstoffes gemäß Beispiel 1a werden bei 70°C in 95 kg vollentsalztes Wasser eingetragen. Nach Zugabe von 14 Lithiumhydroxidlösung (10 %ig) wird bei 70°C und pH 10,5 eine Lösung erhalten, die anschließend mit 'Hochtemperatur'-stabilen Polymermembranen in Spiralwickelmodulbauform entsalzt wird. Die gesättigte Lösung des Li,Na-Mischsalzes besitzt bei 70°C und einer Chloridkonzentration von 0,4 % eine Extinktion von 51 (1 cm Schichtdicke, 1 %ige Lösung in Wasser, Wellenlänge: 630 nm).

### Beispiel 2

### Herstellung einer lagerstabilen Lösung des Na,Li,N-Methyl-diethanolammonium-Farbstoffsalzes

Die in Beispiel 1 c hergestellte Lösung wird bei 70°C und 20 bar Moduleingangsdruck im Wege der Diafiltration zunächst entsalzt (1,5-fache Diafiltration mit VE-Wasser). Zur Anwendung kommt dabei eine Nanofiltrationsmembran (Polyethersulfon, MWCO 400 Dalton, Tₘₐₓ 80°C) als 4"-Spiralwickelmodul mit 44mil parallel Spacer. Das Retentat wird dann mit 18 kg N-Methyl-diethanolamin versetzt. Durch Zugabe von 9,5 Liter Salzsäure (37 %) wird danach auf pH 7,5 gestellt. Es schließt sich eine zweifache Diafiltration an. Der Anteil der Alkanolammoniumkationen beträgt jetzt etwa 55 Äquivalent-% und kann durch weitere Bearbeitung noch erhöht werden. Mit 7,6 Litern Salzsäure (37 %) wird wieder auf pH 7,5 eingestellt. Abschließend erfolgt eine zweifache Diafiltration und eine Aufkonzentrierung. Das erhaltene Retentat wird durch Verdünnen mit Wasser auf eine Extinktion von 76,2 (1 cm Schichtdicke, 1 %ige Lösung in Wasser, Wellenlänge: 630 nm) eingestellt. Die Farbstofflösung besitzt eine gute Lagerstabilität. Zum Schutz vor bakterieller Verkeimung kann mit üblichen Konservierungsmitteln versetzt werden.

Der Anteil der Alkanolammoniumkationen beträgt jetzt etwa 85 Äquivalent-%.

Ausgehend von den in der folgenden Tabelle aufgeführten Farbstoffen erhält man bei Verwendung der angegebenen Alkanolamine nach dem in Beispiel 2 beschriebenen Verfahren ebenfalls lagerstabile, konzentrierte Farbstofflösungen.

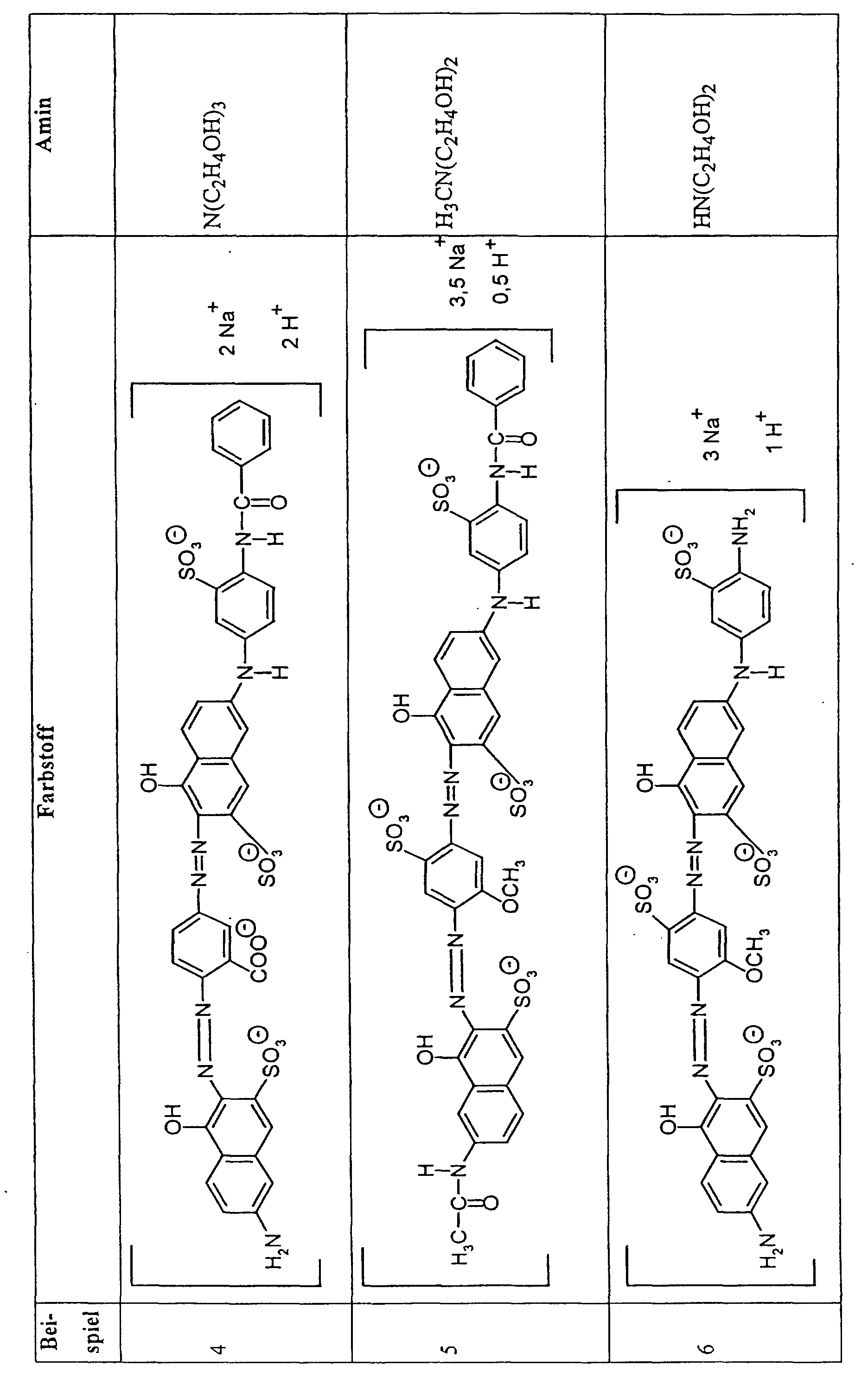

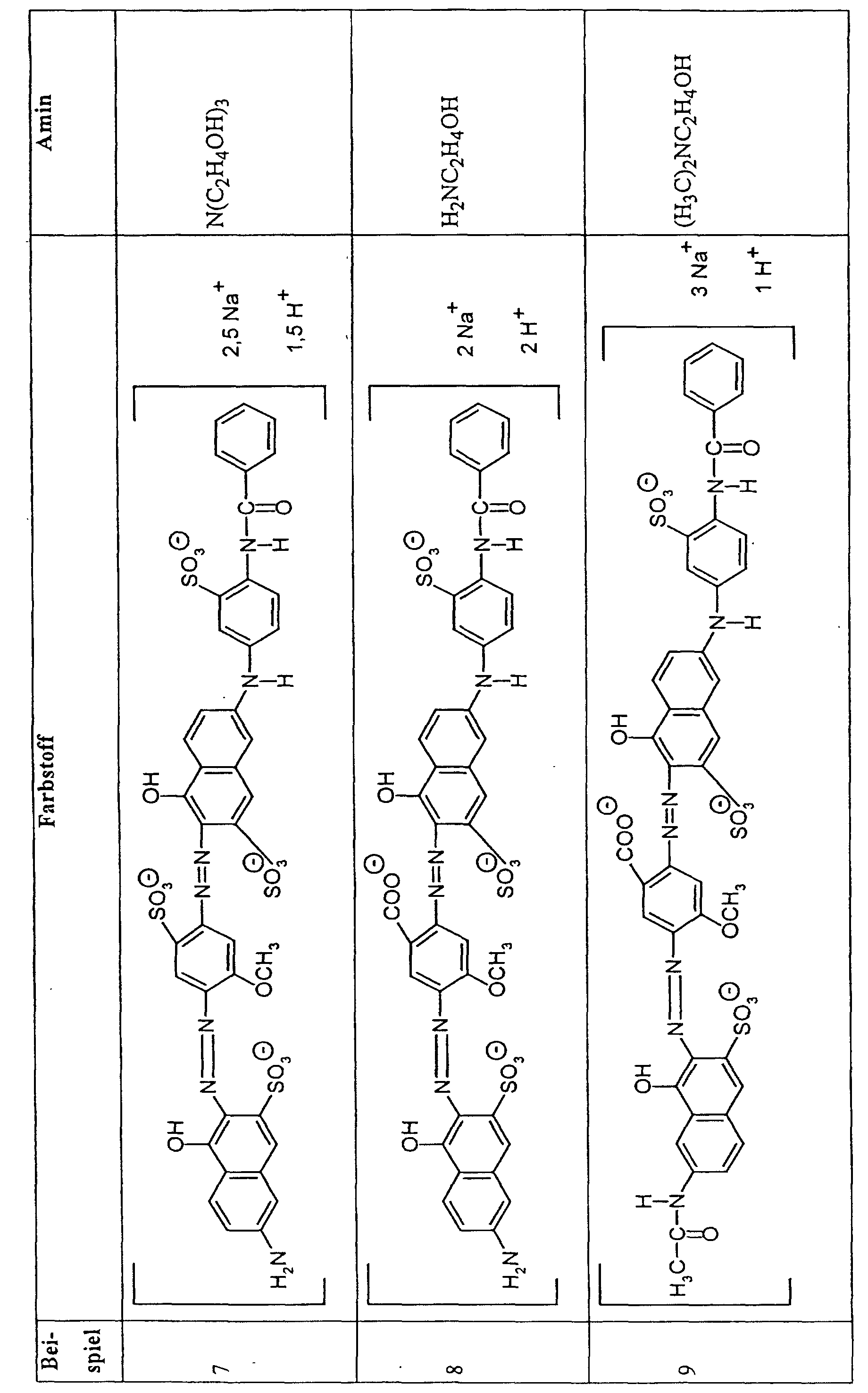

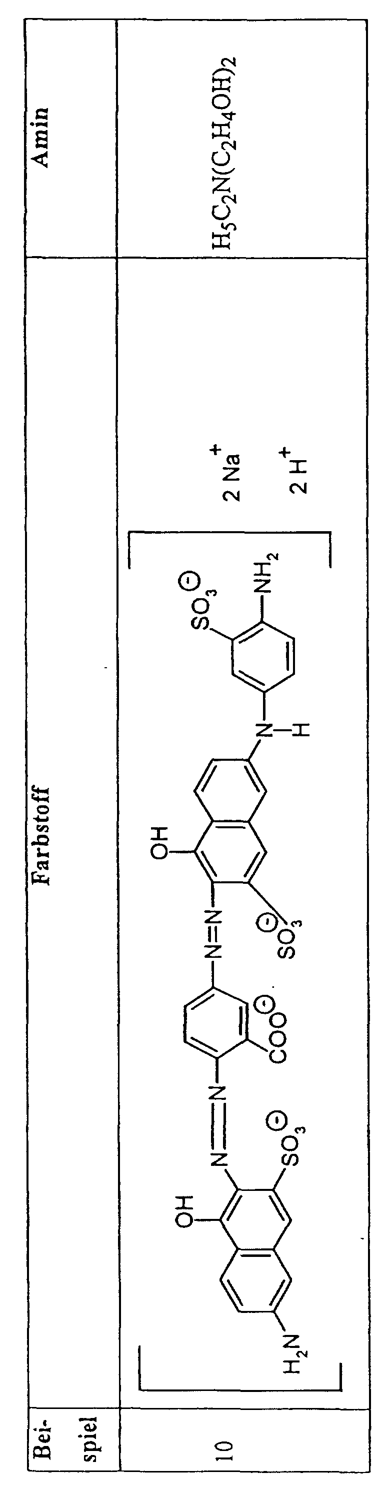

### Beispiel 11

Der in Beispiel 1 a) bei der Isolierung erhaltene Nutschkuchen wird auf der Nutsche fünfmal mit je 1 000 ml einer 2 %igen Salzsäure überschichtet. Nach dem letzten Überschichten entspricht der Farbstoff der Formel

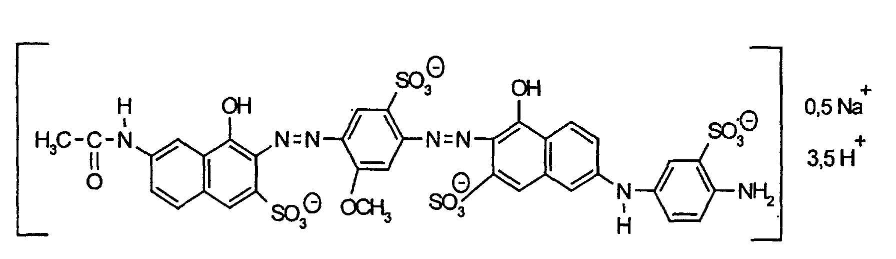

100 g dieser Paste mit einem Farbstoff-Gehalt von 30 % werden bei 50°C in einer Mischung aus 100 ml VE-Wasser und 45 g N-Methyldiethanolamin gelöst. Durch Zugabe von VE-Wasser wird eine Extinktion von 76,2 (1 cm Schichtdicke, 1 %ige Lösung in Wasser, Wellenlänge: 630 nm) eingestellt. Die Farbstofflösung besitzt eine gute Lagerstabilität.

### Beispiel 12

Der in Beispiel la) bei der Isolierung erhaltene Nutschkuchen wird bei 5-10°C in eine Vorlage von 5 000 ml 5 %ige Salzsäure eingetragen und fünf Stunden verrührt. Der Farbstoff wird wieder auf eine Nutsche isoliert. Der Nutschkuchen enthält ca. 30 % Farbstoff mit einem Natrium-Gehalt von ca. 2,5 % (bezogen auf trockene Substanz). 100 g dieser Paste werden bei 50°C in einer Mischung aus 100 ml VE-Wasser und 50 g N-Methyldiethanolamin gelöst. Durch Zugabe von VE-Wasser wird eine Extinktion von 76,2 (1 cm Schichtdicke, 1 %ige Lösung in Wasser, Wellenlänge: 630 nm) eingestellt. Die Farbstofflösung besitzt eine gute Lagerstabilität.

## Patentansprüche

1. Farbstoffe der Formel (VIII) 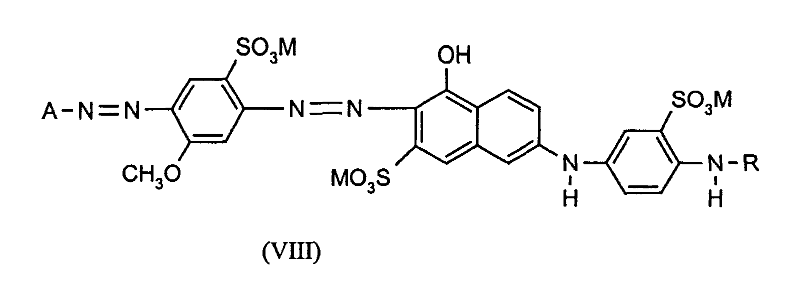 worin
A für einen Rest der Formel 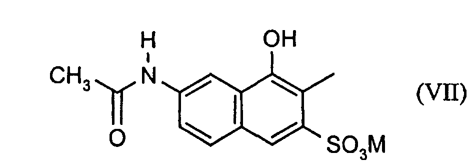
steht,
worin
R für Wasserstoff steht, und
M für ein oder mehrere Kationen steht,
wobei mehr als 25 Äquivalent-% aller Kationen M im Molekül einem Ammoniumrest der Formel ⊕NR₁R₂R₃R₄ entsprechen, worin
R₁, R₂, R₃ und R₄ unabhängig voneinander für Wasserstoff, C₁-C₄-Alkyl und C₂-C₄-Hydroxyalkyl stehen.

2. Farbstoffe gemäß Anspruch 1, worin wenigstens einer der Reste R₁-R₄ C₂-C₄-Hydroxyalkyl bedeutet.

3. Farbstoffe gemäß Anspruch 1, wobei als Ammonium-Rest die folgenden in Frage kommen: H₃⊕NCH₂CH₂OH, H₂⊕N(CH₂CH₂OH)₂, H⊕N(CH₂CH₂OH)₃, ⊕N(CH₂CH₂OH)₄, H⊕N(CH₃)(CH₂CH₂OH)₂, H⊕N(CH₃)₂(CH₂CH₂OH), ⊕N(CH₃)₄ oder H⊕N(C₂H₅)(CH₂CH₂OH)₂.

4. Verfahren zur Herstellung von Farbstoffen gemäß Anspruch 1, **dadurch gekennzeichnet, dass** man Verbindungen der Formel (VIII), worin M für Na⊕, Li⊕ und/oder K⊕ steht, in Form ihrer wässrigen Lösungen oder Suspensionen in Gegenwart von Ammoniumsalzen der Formel ⊕NR₁R₂R₃R₄, An⊖, worin R₁ bis R₄ die in Anspruch 1 angegebenen Bedeutungen haben und An⊖ für ein anorganisches Anion steht, membranfiltriert.

5. Wässrige Farbstoffpräparationen, insbesondere Farbstofflösungen, enthaltend 10 bis 60 Gew.-% eines Farbstoffes gemäß Anspruch 1, bezogen auf die Präparation.

6. Verwendung der Farbstoffe gemäß Anspruch 1 zum Färben von cellulosehaltigen Materialien, insbesondere Papier.

7. Cellulosehaltige Materialien, gefärbt mit wenigstens einem Farbstoff gemäß Anspruch 1.

8. Verfahren zur Herstellung von Farbstoffen der Formel (I) 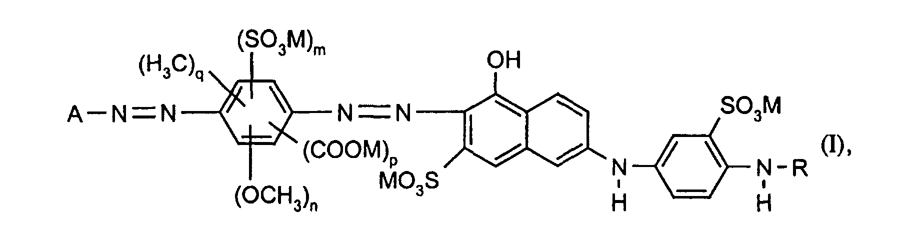 worin
A für einen Rest der Formel 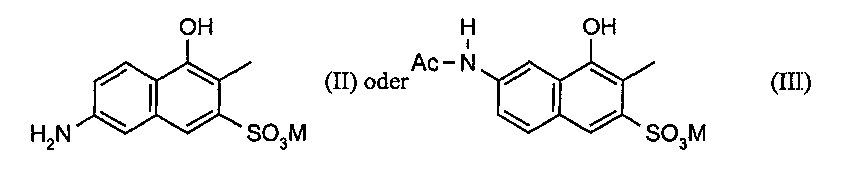 steht,
worin
Ac für einen Acetyl- oder Propionyl- oder einen gegebenenfalls durch CH₃, CH₃O oder COOM substituierten Benzoylrest steht,
m, n, p, q für 0 oder 1 stehen und
m + p = 1 ist,
R für Wasserstoff oder einen gegebenenfalls durch CH₃, CH₃O oder COOM substituierten Benzoylrest steht, und
M für ein oder mehrere Kationen steht,
wobei mehr als 25 Äquivalent-% aller Kationen M im Molekül einem Ammoniumrest der Formel ⊕NR₁R₂R₃R₄ entsprechen, worin
R₁, R₂, R₃ und R₄ unabhängig voneinander für Wasserstoff, C₁-C₄-Alkyl und C₂-C₄-Hydroxyalkyl stehen,
mit der Maßgabe, dass R ≠ Wasserstoff ist, wenn m = 1 und n = 0 und q = 0 ist, **dadurch gekennzeichnet, dass** man Verbindungen der Formel (I), worin M für Na⊕, Li⊕ und /oder K⊕ steht, in Form ihrer wässrigen Lösungen oder Suspensionen in Gegenwart von Ammoniumsalzen der Formel ⊕NR₁R₂R₃R₄An^{⊖}, worin R₁-R₄ die oben angegebene Bedeutung haben und An⊖ für ein anorganisches Anion steht, membranfiltriert.

9. Farbstoffe der Formel (I) 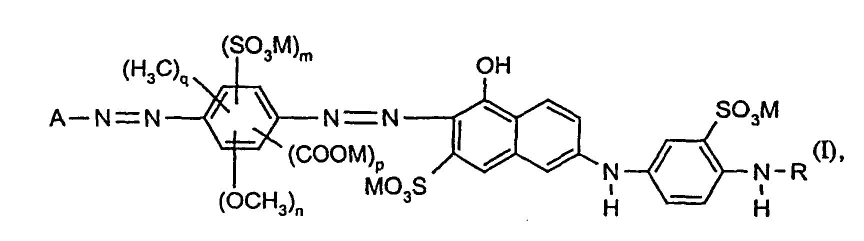 worin
A für einen Rest der Formel 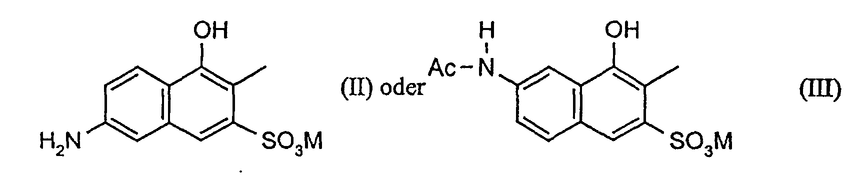 steht,
worin
Ac für einen Acetyl- oder Propionyl- oder einen gegebenenfalls durch CH₃, CH₃O oder COOM substituierten Benzoylrest steht,
m, n, p, q für 0 oder 1 stehen und
m + p = 1 ist,
R für einen gegebenenfalls durch CH₃, CH₃O oder COOM substituierten Benzoylrest steht, und
M für ein oder mehrere Kationen steht,
wobei mehr als 25 Äquivalent-% aller Kationen M im Molekül einem Ammoniumrest der Formel ⊕NR₁R₂R₃R₄ entsprechen, worin
R₁, R₂, R₃ und R₄ unabhängig voneinander für Wasserstoff, C₁-C₄-Alkyl und C₂-C₄-Hydroxyalkyl stehen.

10. Verfahren zur Herstellung von Farbstoffen gemäß Anspruch 9, **dadurch gekennzeichnet, dass** man Verbindungen der Formel (I), worin M für Na⊕, Li⊕ und/oder K⊕ steht, in Form ihrer wässrigen Lösungen oder Suspensionen in Gegenwart von Ammoniumsalzen der Formel ⊕NR₁R₂R₃R₄, An⊖, worin R₁ bis R₄ die in Anspruch 1 angegebenen Bedeutungen haben und An⊖ für ein anorganisches Anion steht, membranfiltriert.

## Claims

1. A dyestuff having the formula (VIII) 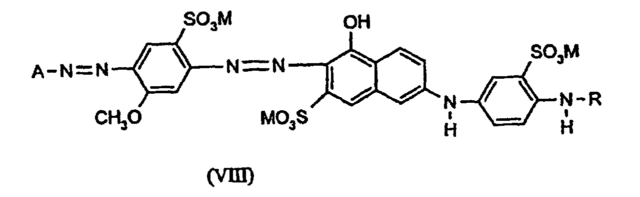 wherein
A represents a radical of the formula 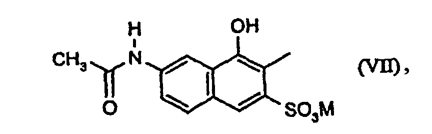
wherein
R represents hydrogen, and
M represents one or more cations,
where more than 25 equivalent % of all cations M in the molecule correspond to an ammonium radical of the formula ⊕NR₁R₂R₃R₄ wherein
R₁, R₂, R₃ and R₄ independently of one another represent hydrogen, C₁-C₄ alkyl and C₂-C₄ hydroxyalkyl.

2. Dyestuffs according to Claim 1, wherein at least one of the radicals R₁-R₄ denotes C₂-C₄ hydroxyalkyl.

3. Dyestuffs according to Claim 1, wherein the ammonium radical is selected from the group consisting of H₃⊕NCH₂CH₂OH, H₂⊕N(CH₂CH₂OH)₂, H⊕N(CH₂CH₂OH)₃, ⊕N(CH₂CH₂OH)₄, H⊕N(CH₃)(CH₂CH₂OH)₂, H⊕N(CH₃)₂(CH₂CH₂OH), ⊕N(CH₃)₄, and H⊕N(C₂H₅)(CH₂CH₂OH)₂.

4. Process for preparing dyestuffs according to Claim 1, **characterized in that** compounds of the formula (VIII) wherein M represents Na⊕, Li⊕ and/or K⊕, in the form of their aqueous solutions or suspensions, are subjected to membrane filtration in the presence of ammonium salts of the formula ⊕NR₁R₂R₃R₄, An⊖, wherein R₁ to R₄ are as defined in Claim 1 and An⊖ represents an inorganic anion.

5. Aqueous dyestuff preparations, especially dyestuff solutions, containing 10 to 60% by weight, based on the preparation, of a dyestuff according to Claim 1.

6. Use of the dyestuffs according to Claim 1 for dyeing cellulose-containing materials, especially paper.

7. Cellulose-containing materials dyed with at least one dyestuff according to Claim 1.

8. Process for preparing dyestuffs of the formula (I) 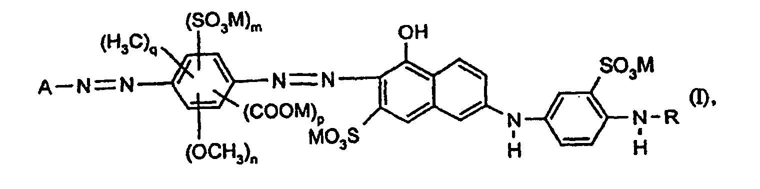 wherein
A represents a radical of the formula 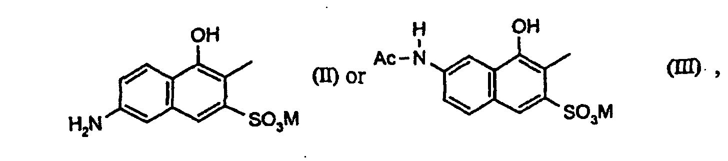
wherein
Ac represents an acetyl or propionyl radical or a benzoyl radical optionally substituted by CH₃, CH₃O or COOM,
m, n, p, and q represent 0 or 1, and
m + p = 1,
R represents hydrogen or a benzoyl radical optionally substituted by CH₃, CH₃O or COOM, and
M represents one or more cations,
where more than 25 equivalent % of all cations M in the molecule correspond to an ammonium radical of the formula ⊕NR₁R₂R₃R₄ wherein
R₁, R₂, R₃ and R₄ independently of one another represent hydrogen, C₁-C₄ alkyl and C₂-C₄ hydroxyalkyl,
with the proviso that R ≠ hydrogen if m = 1 and n = 0 and q = 0, **characterized in that** compounds of the formula (I) wherein M represents Na⊕, Li⊕ and/or K⊕, in the form of their aqueous solutions or suspensions, are subjected to membrane filtration in the presence of ammonium salts of the formula ⊕NR₁R₂R₃R₄An⊖, wherein R₁-R₄ are as defined above and An⊖ represents an inorganic anion.

9. Dyestuffs having the formula (I) 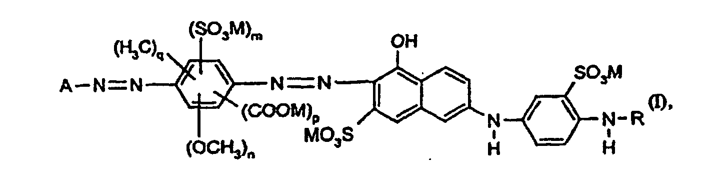 wherein
A represents a radical of the formula 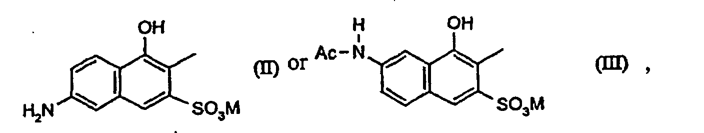
wherein
Ac represents an acetyl or propionyl radical or a benzoyl radical optionally substituted by CH₃, CH₃O or COOM,
m, n, p, and q represent 0 or 1, and
m + p = 1,
R represents a benzoyl radical optionally substituted by CH₃, CH₃O or COOM, and
M represents one or more cations,
where more than 25 equivalent % of all cations M in the molecule correspond to an ammonium radical of the formula ⊕NR₁R₂R₃R₄ wherein
R₁, R₂, R₃ and R₄ independently of one another represent hydrogen, C₁-C₄ alkyl and C₂-C₄ hydroxyalkyl.

10. Process for preparing dyestuffs according to Claim 9, **characterized in that** compounds of the formula (I) wherein M represents Na⊕, Li⊕ and/or K⊕, in the form of their aqueous solutions or suspensions, are subjected to membrane filtration in the presence of ammonium salts of the formula ⊕NR₁R₂R₃R₄, An⊖ wherein R₁ to R₄ are as defined in Claim 1 and An⊖ represents an inorganic anion.

## Revendications

1. Colorants de formule 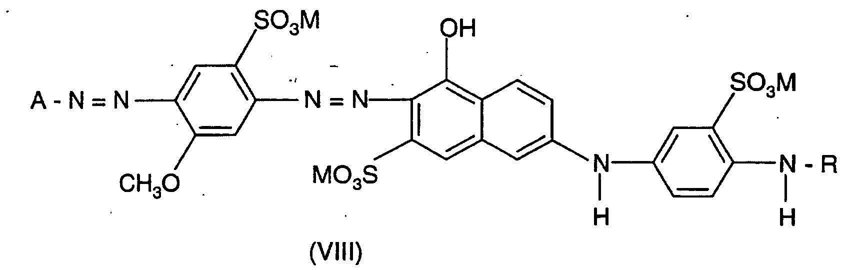 où
A représente un reste de formule 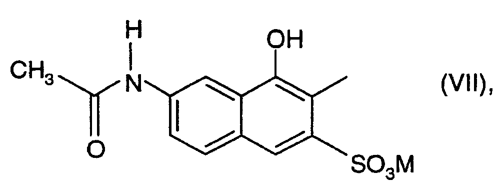 où
R représente l'hydrogène et
M représente un ou plusieurs cations,
où plus de 25 équivalents % de tous les cations M dans la molécule correspondent à un reste ammonium de formule ⊕NR₁R₂R₃R₄, où
R₁, R₂, R₃ et R₄ représentent indépendamment les uns des autres l'hydrogène, alkyle en C₁-C₄ et hydroalkyle en C₂-C₄.

2. Colorants selon la revendication 1, où au moins l'un des restes R₁-R₄ représente hydroalkyle en C₂-C₄.

3. Colorants selon la revendication 1, où, comme reste ammonium, on trouve les restes suivants : H₃⊕NCH₂CH₂OH, H₂⊕N(CH₂CH₂OH)₂, H⊕N(CH₂CH₂OH)₃, ⊕N(CH₂CH₂OH)₄, H⊕N(CH₃)( CH₂CH₂OH)₂, H⊕N(CH₃)₂(CH₂CH₂OH), ⊕N(CH₃)₄ ou H⊕N(C₂H₅)( CH₂CH₂OH)₂.

4. Procédé de préparation de colorants selon la revendication 1, **caractérisé en ce que** l'on filtre sur membrane des composés de formule (VIII) où M représente Na⊕, Li⊕ et/ou K⊕, sous forme de leurs solutions ou suspensions aqueuses en présence de sels d'ammonium de formule ⊕NR₁R₂R₃R₄, An⊖ où R₁ à R₄ ont les significations indiquées dans la revendication 1 et An⊖ représente un anion inorganique.

5. Préparations aqueuses de colorant, en particulier solutions de colorant, contenant 10 à 60 % en masse d'un colorant selon la revendication 1 par rapport à la préparation.

6. Utilisation des colorants selon la revendication 1 pour colorer des matériaux contenant de la cellulose, en particulier le papier.

7. Matériaux contenant de la cellulose colorés avec au moins un colorant selon la revendication 1.

8. Procédé de préparation de colorants de formule (I) 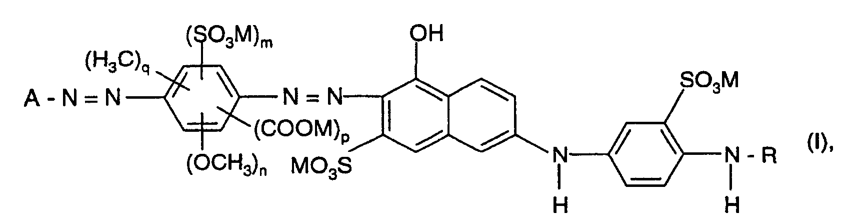 où
A représente un reste de formule 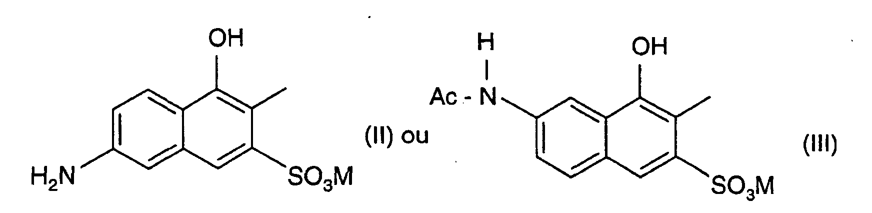 où
Ac représente un reste acétyle ou propionyle ou un reste benzoyle éventuellement substitué par CH₃, CH₃O ou COOM,
m, n, p, q représentent 0 ou 1 et
m + p = 1,
R représente l'hydrogène ou un reste benzoyle éventuellement substitué par CH₃, CH₃O ou COOM, et
M représente un ou plusieurs cations,
où plus de 25 équivalents % de tous les cations M dans la molécule correspondent à un reste ammonium de formule ⊕NR₁R₂R₃R₄, où
R₁, R₂, R₃ et R₄ représentent indépendamment les uns des autres l'hydrogène, alkyle en C₁-C₄ et hydroxyalkyle en C₂-C₄,
à condition que R soit différent de l'hydrogène quand m = 1 et n = 0 et q = 0, **caractérisé en ce que** l'on filtre sur membrane des composés de formule (I), où M représente Na⊕, Li⊕ et/ou K⊕, sous forme de leurs solutions ou suspensions aqueuses en présence de sels d'ammonium de formule ⊕NR₁R₂R₃R₄, An⊖ où R₁-R₄ ont la signification indiquée ci-dessus et An⊖ représente un anion inorganique.

9. Colorants de formule (I) 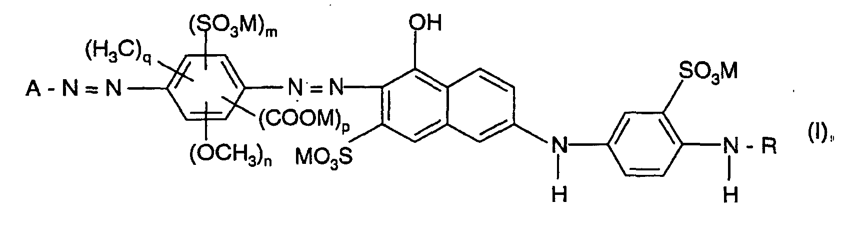 où
A représente un reste de formule 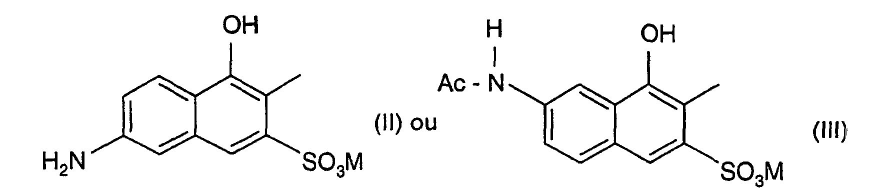 où
Ac représente un reste acétyle ou propionyle ou un reste benzoyle éventuellement substitué par CH₃, CH₃O ou COOM,
m, n, p, q représentent 0 ou 1 et
m + p = 1,
R représente un reste benzoyle éventuellement substitué par CH₃, CH₃O ou COOM, et
M représente un ou plusieurs cations,
où plus de 25 équivalents % de tous les cations M dans la molécule correspondent à un reste ammonium de formule ⊕NR₁R₂R₃R₄, où
R₁, R₂, R₃ et R₄ représentent indépendamment les uns des autres l'hydrogène, alkyle en C₁-C₄ et hydroxyalkyle en C₂-C₄.

10. Procédé de préparation de colorants selon la revendication 9, **caractérisé en ce que** l'on filtre sur membrane des composés de formule (I), où M représente Na⊕, Li⊕ et/ou K⊕, sous forme de leurs solutions ou suspensions aqueuses en présence de sels d'ammonium de formule ⊕NR₁R₂R₃R₄, An⊖, où R₁ à R₄ ont les significations indiquées dans la revendication 1 et An⊖ représente un anion inorganique.
